# EUROPÄISCHE PATENTSCHRIFT

(11) **EP 2 888 078 B1**
(45) Veröffentlichungstag und Bekanntmachung des Hinweises auf die Patenterteilung: **21.02.2018**
(21) Anmeldenummer: 13753137.2
(22) Anmeldetag: 15.08.2013
(51) Int. Cl.: B23Q 1/54, B25B 11/02, B25J 9/00, B25J 15/04, B23Q 1/66, B23Q 7/02, B23Q 7/14, B62D 65/00, B25J 9/10

(54) **VORRICHTUNG ZUR BEREITSTELLUNG VON HALTE- UND/ODER BEARBEITUNGSEINRICHTUNGEN UND SYSTEM**
DEVICE FOR PROVIDING RETAINING AND/OR PROCESSING APPARATUSES AND SYSTEM
DISPOSITIF DE FOURNITURE D'APPAREILS DE SUPPORT ET/OU D'USINAGE ET SYSTÈME

(30) Priorität: 24.08.2012 DE 102012107831
(43) Veröffentlichungstag der Anmeldung: 01.07.2015
(73) Patentinhaber: ThyssenKrupp System Engineering GmbH, 74076 Heilbronn (DE)
(72) Erfinder: DÖRR, Hardy, 66589 Merchweiler (DE); HAAS, Natalja, 66701 Beckingen (DE)
(74) Vertreter: thyssenkrupp Intellectual Property GmbH
(86) Internationale Anmeldenummer: PCT/EP2013/067094
(87) Internationale Veröffentlichungsnummer: WO 2014/029690

(56) Entgegenhaltungen:
- DE-U1-202004 009 601
- GB-A- 793 898
- GB-A- 2 105 234

## Beschreibung

### Stand der Technik

Die vorliegende Erfindung geht aus von einer Vorrichtung zur Bereitstellung von Halte- und/oder Bearbeitungseinrichtungen für einen Manipulator, insbesondere in einer Herstellungsstraße zur Herstellung von Fahrzeugkarosserien.

Es ist bekannt, Werkstücke in Herstellungsstraßen von Fahrzeugkarosserien mit Manipulatoren von einer Herstellungsstation zu einer nächsten Herstellungsstation zu transportieren. Beispielsweise werden für den Prozess des Warmumformens von Blechteilen in Umformpressen, insbesondere Karosserieblechteilen der Automobilindustrie, Glühöfen zum Erwärmen der umzuformenden Blechteile auf Umformtemperatur eingesetzt. Zwischen der Auslaufstrecke solcher Glühöfen und der Umformpresse müssen die heißen Blechteile mittels entsprechender Handhabungssysteme transportiert werden. Zum Weitertransport der Blechteile dienen Manipulatoren, wie beispielsweise Industrieroboter oder Mehrachs-Feedersysteme mit durch Kupplungseinheiten angedockten Bauteilhalteeinrichtungen.

Die GB 2 105 234 A zeigt einen Drehteller, der um das Halteelement drehbar ist. Das Haltelement kann seinerseits mit dem Rahmen verschwenkt werden. Infolge der orthogonalen Ausrichtung der Drehachse des Haltelements zu der Schwenkachse des Rahmens kann keines der Bauteile auf einer Planetenbahn um ein anderes bewegt werden.

Die DE 20 2004 009 601 U1 zeigt eine Werkzeugplatte, die an einem oberen Befestigungsgelenk gelenkig befestigt ist und die an ihrem unteren Ende während des Wechsels eines Stützarms gehalten bzw. hoch oder runter verschwenkt werden kann. Auch hieraus kann sich keine Bewegung von Bauteilen auf einer Planetenbahn ergeben.

Die GB 793898 A zeigt einen Mechanismus, mittels dem ein längliches Werkstück zwischen zwei Bearbeitungsmaschinen bewegt werden kann, wobei das Werkstück über einen Arm verschwenkt wird, der gleichzeitig eine 180°-Drehung um eine Vertikalachse macht.

Üblicherweise werden die zu bearbeitenden Produktionsteile in einer Herstellungsstraße ständig gewechselt (auch als "Batchbetrieb" bezeichnet), so dass auch der Manipulator ständig mit unterschiedlichen auf die Werkstücke spezifisch angepassten Halteeinrichtungen ausgerüstet bzw. umgerüstet werden muss. Der Wechsel von einer Halteeinrichtung auf eine dem nachfolgenden Werkstück entsprechende Halteeinrichtung erfolgt häufig manuell durch Montagepersonal. Die Wartung und Instandhaltung der Halteeinrichtung wird außerhalb der Produktionsanlage auf gesondert eingerichteten Plätzen durchgeführt.

### Offenbarung der Erfindung

Es ist eine Aufgabe der vorliegenden Erfindung eine Vorrichtung zur Bereitstellung von Halte- und/oder Bearbeitungseinrichtungen für einen Manipulator und ein entsprechendes System mit einem Manipulator und einer Vorrichtung zur Bereitstellung von Halte- und/oder Bearbeitungseinrichtungen zur Verfügung zu stellen, bei welchen eine automatisierte, schnelle und variable Bestückung des Manipulators mit unterschiedlichen Halte- und/oder Bearbeitungseinrichtungen erzielt wird. Ferner soll die Wartung und Instandhaltung der Halte- und/oder Bearbeitungseinrichtungen erleichtert werden.

Gelöst wird diese Aufgabe mit einer Vorrichtung zur Bereitstellung von Halte- und/oder Bearbeitungseinrichtungen für einen Manipulator wie in Anspruch 1 definiert. Die erfindungsgemäße Vorrichtung hat gegenüber dem Stand der Technik den Vorteil, dass eine automatisierte und schnellere Bestückung eines Manipulators mit verschiedenen Halte- und/oder Bearbeitungseinrichtungen ermöglicht wird, indem die bewegliche Vorrichtung wenigstens eine Halte- und/oder Bearbeitungseinrichtung für den Manipulator mit einer der zwei Bereitstellungselementen in einer Bereitstellungsposition bereithält, in welcher die Halte- und/oder Bearbeitungseinrichtung von dem Manipulator in einfacher Weise und insbesondere automatisch aufgenommen werden kann. Das entsprechende Bereitstellungselement wird dabei mittels des zugehörigen Schwenkantriebs derart verschwenkt, dass eine schnelle Aufnahme durch den Manipulator möglich ist. Gleichzeitig befindet sich das andere Bereitstellungselement in einer Warteposition, in welcher in einfacher Weise die auf diesem Bereitstellungselement befindliche Halte- und/oder Bearbeitungseinrichtung ausgetauscht und/oder gewartet werden kann. Die Drehbarkeit des Basiselements um die Drehachse ermöglicht zudem, dass in einfacher Weise zwischen den beiden Bereitstellungselementen gewechselt werden kann, so dass entweder das erste oder das zweite Bereitstellungselement dem Manipulator eine Halte- und/oder Bearbeitungseinrichtung zur Verfügung stellt. Der Manipulator umfasst vorzugsweise einen Mehrachsen-Feeder zum Bearbeiten, Halten und/oder Transportieren eines Werkstücks mittels einer oder mehrerer Halte- und/oder Bearbeitungseinrichtungen, wobei der Feeder die Halte- und/oder Bearbeitungseinrichtung durch eine vertikale Bewegung seines Aufnahmekopfes vom jeweiligen Bereitstellungselement aufnehmen kann. Alternativ wäre aber auch denkbar, dass der Manipulator einen Industrieroboter zum Bearbeiten, Halten und/oder Transportieren eines Werkstücks mittels einer oder mehrerer Halte- und/oder Bearbeitungseinrichtungen umfasst. Das Werkstück ist insbesondere ein Metallbauteil einer Fahrzeugkarosserie.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass das erste Bereitstellungselement eine Aufbauplatte umfasst, auf welcher eine Fixiervorrichtung zum Fixieren einer Halte- und/oder Bearbeitungseinrichtung angeordnet ist. Die Fixiervorrichtung sorgt vorteilhafterweise dafür, dass die Halte- und/oder Bearbeitungseinrichtung an der Aufbauplatte fixiert bleiben, bis sie vom Manipulator aufgenommen werden. Denkbar ist, dass das Basiselement eine langsame Drehung um die Drehachse ausführt, damit die Werker zum Warten und/oder Bestücken der Bereitstellungselemente nicht gefährdet werden. Alternativ ist denkbar, dass eine die Vorrichtung eine Sicherheitseinrichtung, beispielsweise eine Lichtschranke, umfasst, welche sicherstellt, dass durch die Drehung des Basiselements kein Werker gefährdet wird und sodann eine schnelle Drehung des Basiselements oder ein schnelles Verschwenken des Bereitstellungselement durchgeführt werden kann, wodurch die Umrüstzeiten weiter verkürzt werden. Ferner ist es möglich, dass die Aufbauplatte in der Warteposition in eine vertikale Ausrichtung überführt wird, in welcher ein vergleichsweise einfaches Auswechseln, Warten und/oder Instandhaltung der Halte- und/oder Bearbeitungseinrichtung möglich ist. Vorteilhafterweise müssen die Halte- und/oder Bearbeitungseinrichtungen somit nicht mehr aus der Herstellungsstraße entnommen werden, um Wartungs- und/oder Instandhaltungsarbeiten daran durchzuführen.

Gemäß einer bevorzugten Ausführungsform der vorliegenden Erfindung ist vorgesehen, dass die erste Schwenkeinrichtung einen ersten Schwenkarm umfasst, dessen eines Ende über ein zweites Drehgelenk drehgelenkig am Basiselement befestigt ist und dessen anderes Ende über ein erstes Drehgelenk drehgelenkig am ersten Bereitstellungselement befestigt ist. Vorteilhafterweise kann das erste Bereitstellungselement somit zwischen einer Bereitstellungsposition, in welcher sich die Haupterstreckungsebene der Aufbauplatte vorzugsweise in horizontaler Richtung erstreckt, und einer Warteposition, in welcher sich die Haupterstreckungsebene der Aufbauplatte in vertikaler Richtung erstreckt, verschwenkt werden. Die horizontale Ausrichtung der Aufbaupatte in der Bereitstellungsposition hat den Vorteil, dass die Halte- und/oder Bearbeitungseinrichtungen durch einen als Mehrachsen-Feedersystem ausgebildeten Manipulator in einfacher Weise aufgenommen werden können, indem der Kopf des Feeder eine vertikale Bewegung ausführt. Ferner wird der Bewegungsablauf zur Aufnahme von Halte- und/oder Bearbeitungseinrichtungen eines als Industrieroboter ausgebildeten Manipulators vereinfacht. Dies kann insbesondere dann von Vorteil sein, wenn nur sehr begrenzter Raum für die Bewegungen des Industrieroboters vorhanden ist. In der Warteposition ist ferner eine gute Erreichbarkeit der Halte- und/oder Bearbeitungseinrichtung durch einen Werker gewährleistet. Das erste Bereitstellungselement ist vorteilhafterweise über zwei Drehgelenke mit dem Basiselement verbunden, wobei das erste Bereitstellungselement beim Überführen zwischen der Bereitstellungsposition und der Warteposition sowohl um die Drehachse des ersten Drehgelenks, als auch um die Drehachse des zweiten Drehgelenks verschwenkt wird. Das eine Drehgelenk bewegt sich dabei auf einer Planetenbahn um das andere Drehgelenk. Ein Vorteil dieser Drehmechanik ist, dass eine Bewegungskombination ermöglicht wird, wodurch die Aufbauplatte sowohl ausgerichtet, als auch positioniert wird.

Gemäß einer bevorzugten Ausführungsform der vorliegenden Erfindung ist vorgesehen, dass die erste Schwenkeinrichtung einen ersten Kettenantrieb umfasst, wobei der erste Kettenantrieb ein mit dem ersten Bereitstellungselement gekoppeltes erstes Kettenrad, ein mit dem Basiselement gekoppeltes zweites Kettenrad, sowie eine auf dem ersten Kettenrad und auf dem zweiten Kettenrad laufende Kette umfasst. In vorteilhafter Weise wird durch die Kopplung des ersten und zweiten Kettenrads über die Kette ein Verschwenken der Aufbauplatte herbeigeführt, wenn der erste Schwenkarm oder eines der Kettenräder bewegt werden.

Gemäß einer bevorzugten Ausführungsform der vorliegenden Erfindung ist vorgesehen, dass der erste Schwenkarm mittels eines ersten Motors um die Drehachse des zweiten Drehgelenks verschwenkbar ist. Das zweite Kettenrad ist vorzugsweise drehfest mit dem Basiselement gekoppelt, während das erste Kettenrad vorzugsweise drehfest mit dem ersten Bereitstellungselement gekoppelt ist. Die Zentralachse des ersten Kettenrads fluchtet mit der Drehachse des ersten Drehgelenks, während die Zentralachse des zweiten Kettenrads mit der Drehachse des zweiten Drehgelenks fluchtet. Ein Verschwenken des ersten Schwenkarms mittels des ersten Motors führt nun dazu, dass sich das erste Kettenrad auf einer Planetenbahn um das zweite Kettenrad bewegt. Durch die Kopplung zwischen dem ersten und dem zweiten Kettenrad mittels der Kette wird durch das Verschwenken des ersten Schwenkarms das erste Kettenrad und somit auch die erste Aufbauplatte relativ zum ersten Schwenkarm verschwenkt. Die Kombination aus Verschwenken des ersten Schwenkarms und Verdrehung des ersten Kettenrads führt insbesondere dazu, dass sich das erste Bereitstellungselement von der vertikalen Warteposition in die horizontale Bereitstellungsposition verschwenkt. Der resultierende Schwenkwinkel der Aufbauplatte zwischen der Bereitstellungsposition und der Warteposition hängt dabei von dem Größenverhältnis zwischen dem ersten und dem zweiten Kettenrad ab. Vorteilhafterweise kann der Schwenkwinkel in einfacher Weise durch Austauschen des ersten und/oder zweiten Kettenrads eingestellt werden. Der Durchmesser des zweiten Kettenrads ist vorzugsweise größer als der Durchmesser des ersten Kettenrads. Durch das Verschwenken des ersten Schwenkarms wird also das erste Bereitstellungselement sowohl um die Drehachse des ersten Drehgelenks, als auch um die Drehachse des zweiten Drehgelenks verschwenkt, so dass eine Ausrichtung und gleichzeitig eine Positionierung der Aufbauplatte lediglich durch den einen ersten Motors erfolgt. Vorzugsweise ist vorgesehen, dass der erste Motor eine in einem am Basiselement befestigten ersten Lagerbock drehbar gelagerte Antriebswelle antreibt, auf welcher ein Ende des Schwenkarm drehfest befestigt ist, während das zweite Kettenrad drehfest am ersten Lagerbock befestigt ist. Ferner ist das andere Ende des Schwenkarms vorzugsweise drehgelenkig in einem am ersten Bereitstellungselement befestigten zweiten Lagerbock gelagert, wobei das erste Kettenrad drehfest am zweiten Lagerbock befestigt ist.

Gemäß einer alternativen Ausführungsform der vorliegenden Erfindung ist vorgesehen, dass das zweite Kettenrad über eine Antriebsachse mit dem ersten Motor gekoppelt ist und das zweite Kettenrad um eine mit dem ersten Drehgelenk fluchtende Drehachse mittels des ersten Motors drehbar ist, während ein Ende des ersten Schwenkarms drehgelenkig an einem am Basiselement befestigten ersten Lagerbock gelagert ist. Das andere Ende des ersten Schwenkarms ist vorzugsweise drehgelenkig an einem am ersten Bereitstellungselement befestigten zweiten Lagerbock befestigt, während das erste Kettenrad drehfest am zweiten Lagerbock befestigt ist. Eine Drehung des zweiten Kettenrads mittels des ersten Motors führt sodann ebenfalls zu einem Verschwenken des Bereitstellungselements sowohl um die Drehachse des ersten Drehgelenks, als auch um die Drehachse des zweiten Drehgelenks. Gemäß einer bevorzugten Ausführungsform der vorliegenden Erfindung ist vorgesehen, dass das zweite Bereitstellungselement eine weitere Aufbauplatte umfasst, auf welcher eine weitere Fixiervorrichtung zum Fixieren einer Halte und/oder Bearbeitungseinrichtung angeordnet ist und/oder wobei die zweite Schwenkeinrichtung einen zweiten Schwenkarm umfasst, dessen eines Ende über ein weiteres zweites Drehgelenk drehgelenkig am Basiselement befestigt ist und dessen anderes Ende über ein weiteres erstes Drehgelenk drehgelenkig am zweiten Bereitstellungselement befestigt ist und/oder dass die zweite Schwenkeinrichtung einen zweiten Kettenantrieb umfasst, wobei der zweite Kettenantrieb ein mit dem zweiten Bereitstellungselement gekoppeltes weiteres erstes Kettenrad, ein mit dem Basiselement gekoppeltes weiteres zweites Kettenrad , sowie eine auf dem weiteren ersten Kettenrad und auf dem weiteren zweiten Kettenrad laufende weitere Kette umfasst und/oder wobei das weitere zweite Kettenrad mit einer sich entlang der zweiten Schwenkachse erstreckenden weiteren Antriebsachse verbunden ist, welche mittels eines zweiten Motors antreibbar ist und welche mit der Drehachse des weiteren zweiten Drehgelenks fluchtet, und/oder dass das weitere erste Kettenrad drehfest relativ zum zweiten Bereitstellungselement am zweiten Bereitstellungselement befestigt ist, wobei eine Zentralachse des weiteren ersten Kettenrads mit der Drehachse des weiteren ersten Drehgelenks fluchtet. In vorteilhafter Weise weist die erfindungsgemäße Vorrichtung somit wenigstens ein zum ersten Bereitstellungselement identisch aufgebautes zweites Bereitstellungselement und eine zur ersten Schwenkeinrichtung identisch aufgebaute zweite Schwenkeinrichtung auf. Eine Drehung des Basiselements führt dazu, dass dem Manipulator eine Halte- und/oder Bearbeitungseinrichtung wahlweise vom ersten Bereitstellungselement oder vom zweiten Bereitstellungselement zur Verfügung gestellt bzw. zum Aufnehmen derselben hingehalten wird, während das andere des ersten oder zweiten Bereitstellungselement in die Warteposition verfahren wird. Das erste und das zweite Bereitstellungselement sind insbesondere derart an dem Basiselement angeordnet, dass die erste und die zweite Schwenkachse zueinander parallel ausgerichtet sind. Das erste und zweite Bereitstellungselement sind sodann insbesondere auf gegenüberliegenden Seiten des Basiselements und spiegelsymmetrisch bezüglich einer durch die Drehachse und parallel zur Drehachse verlaufende Spiegelebene angeordnet. Vorzugsweise sind das erste und zweite Bereitstellungselement wenigstens rotationsymmetrisch um die Drehachse des Basiselements angeordnet.

Gemäß einer bevorzugten Ausführungsform der vorliegenden Erfindung ist vorgesehen, dass das Basiselement als Drehtisch ausgebildet ist, welcher gegenüber der Haltebasis mittels eines Antriebsmotors drehbar ist. In vorteilhafter Weise kann somit automatisch das Basiselement gedreht werden und auf diese Weise zwischen dem ersten und zweiten Bereitstellungselement gewechselt werden.

Gemäß einer bevorzugten Ausführungsform der vorliegenden Erfindung ist vorgesehen, dass die Vorrichtung ein drittes und viertes Bereitstellungselement aufweist, wobei das dritte und das vierte Bereitstellungselement jeweils zur Aufnahme der Halte- und/oder Bearbeitungseinrichtungen vorgesehen sind, wobei das dritte Bereitstellungselement mittels einer dritten Schwenkeinrichtung um eine zur Drehachse senkrechte dritte Schwenkachse verschwenkbar ist und wobei das vierte Bereitstellungselement mittels einer vierten Schwenkeinrichtung um eine zur Drehachse senkrechte vierte Schwenkachse verschwenkbar ist, wobei das erste, zweite, dritte und vierte Bereitstellungselement vorzugsweise rotationssymmetrisch um die Drehachse angeordnet sind. Vorzugsweise ermöglichen das dritte und/oder vierte Bereitstellungselement dem Manipulator weitere Halte- und/oder Bearbeitungseinrichtungen zur Verfügung zu stellen. Das dritte und/oder vierte Bereitstellungselement ist vorzugsweise baugleich zum ersten Bereitstellungselement ausgebildet, während die dritte und/oder vierte Schwenkeinrichtung vorzugsweise baugleich zur ersten Schwenkeinrichtung ausgebildet ist. Denkbar ist, dass weitere mittels weiteren Schwenkeinrichtungen schwenkbare Bereitstellungselemente am Basiselement befestigt sind. Die Vorrichtung ist vorzugsweise modular mit der benötigten Anzahl von Bereitstellungselementen ausrüstbar und somit an unterschiedliche Begebenheiten und Anforderungen anpassbar.

Ein weiterer Gegenstand der vorliegenden Erfindung ist ein System zum Transportieren und/oder Bearbeiten von Werkstücken innerhalb einer Herstellungsstraße zur Herstellung von Fahrzeugkarosserien, wobei das System die erfindungsgemäße Vorrichtung zur Bereitstellung der Halte- und/oder Bearbeitungseinrichtungen aufweist und wobei das System ferner einen mit von der Vorrichtung bereitgestellten Halte- und/oder Bearbeitungseinrichtungen bestückbaren Manipulator aufweist.

Gemäß einer bevorzugten Ausführungsform der vorliegenden Erfindung weist das System ein Magazin für eine Mehrzahl von Halte- und/oder Bearbeitungseinrichtungen auf, wobei die Fixiervorrichtung eines Bereitstellungselements automatisch mit Halte- und/oder Bearbeitungseinrichtungen aus dem Magazin zu beladen sind und/oder wobei automatisch Halte- und/oder Bearbeitungseinrichtungen von der Fixiervorrichtung eines Bereitstellungselements in das Magazin zu entladen sind. Vorzugsweise weist das System ferner eine Wechsel- und/oder Wartungsstation auf, in welcher eine auf dem Bereitstellungselement angeordnete Halte- und/oder Bearbeitungseinrichtung von einem Werker gewechselt, gewartet und/oder geprüft werden kann. Durch eine Drehung des Basiselements 3 um die Drehachse kann ein Bereitstellungselement wahlweise in eine dem Manipulator zugewandte Stellung, in eine dem Magazin zugewandte Stellung oder in die Wartungsstation verfahren werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

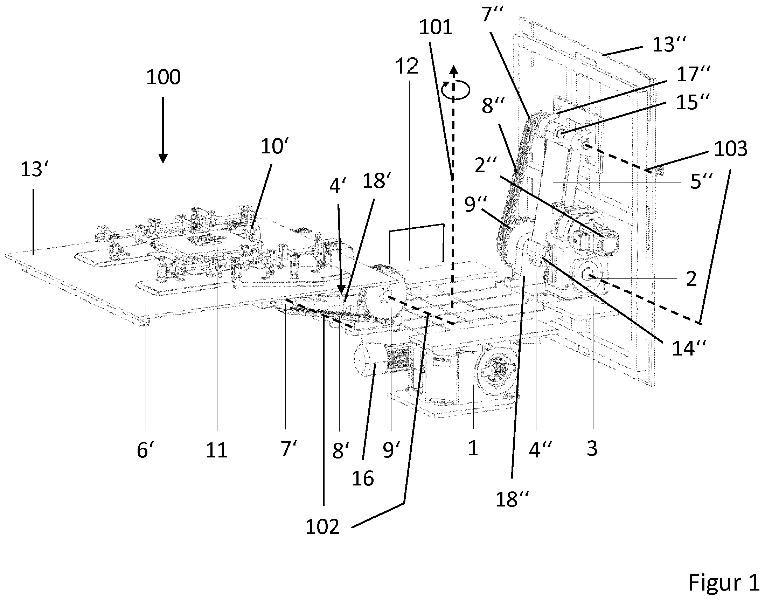

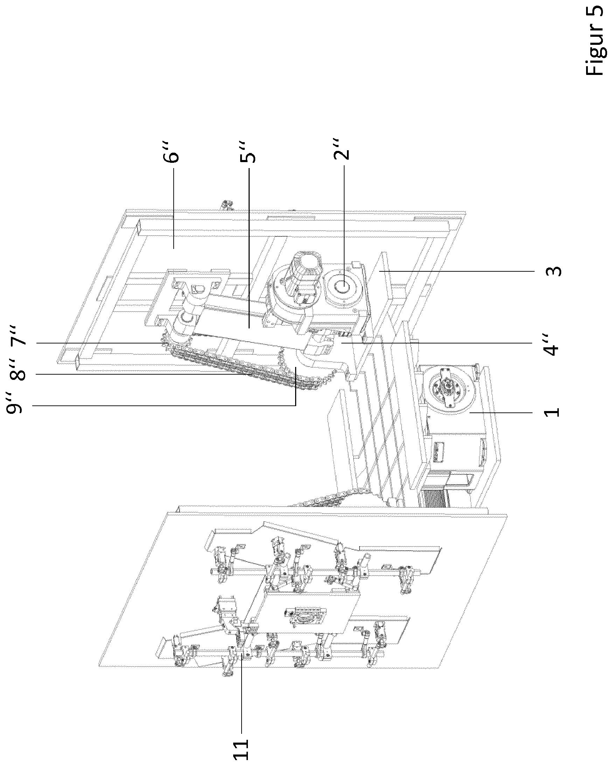

- **Figuren 1 bis 6**: zeigen schematische Perspektivansichten einer Vorrichtung zur Bereitstellung von Halte- und/oder Bearbeitungseinrichtungen gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figuren 1 bis 6 sind schematische Perspektivansichten einer Vorrichtung 100 zur Bereitstellung von Halte- und/oder Bearbeitungseinrichtungen 11 für einen Aktuator gemäß einer beispielhaften Ausführungsform der vorliegenden Erfindung dargestellt.

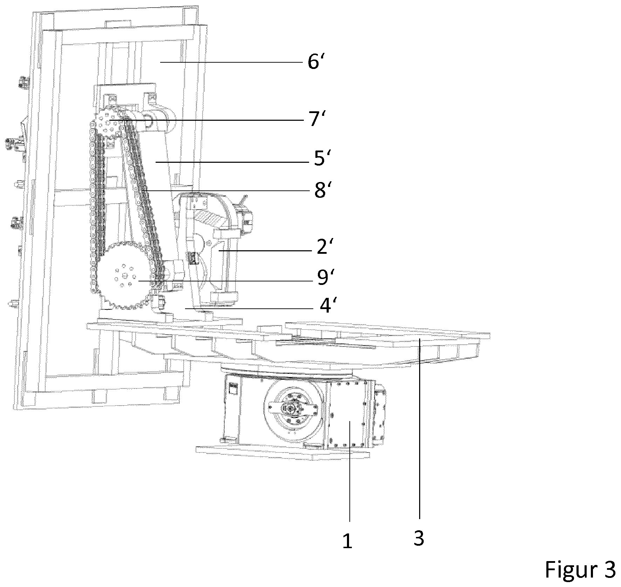

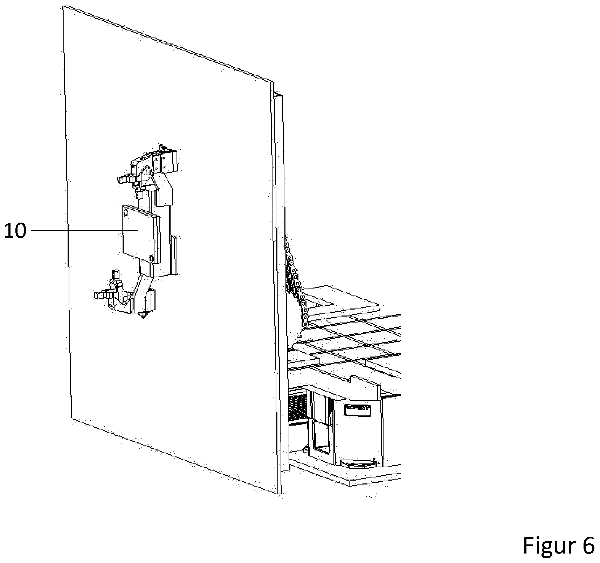

Die Vorrichtung 100 weist eine auf dem Boden fest montierte Haltebasis 1 auf, auf welcher nach Art eines Drehtisches ein Basiselement 3 um eine vertikale Drehachse 101 drehbar befestigt ist. Das Basiselement 3 dient dabei als Tischplatte des Drehtisches, wobei der Drehtisch mittels eines Antriebsmotors 16 um die Drehachse 101 gedreht werden kann. Auf einer Seite des Drehtisches ist ein erstes Bereitstellungselement 6' angeordnet, welches eine erste Aufbauplatte 13' umfasst. Auf der ersten Aufbauplatte 13' ist eine Fixiervorrichtung 10 angeordnet (siehe insbesondere Detailansicht in Figur 6), in welcher eine Halte- und/oder Bearbeitungseinrichtung 11 lösbar und austauschbar aufgenommen ist. Das erste Bereitstellungselement 6' ist über eine erste Schwenkeinrichtung 4' an das Basiselement 3 derart angebunden, dass die erste Aufbauplatte 13' um zwei zur Drehachse 101 senkrechte und im Wesentlichen horizontal verlaufende erste Schwenkachsen 102 verschwenkbar ist. Die erste Aufbauplatte ist mittels der ersten Schwenkeinrichtung 4' zwischen einer in Figur 1 illustrierten Bereitstellungsposition, in welche die erste Aufbauplatte 13' im Wesentlichen horizontal ausgerichtet ist, und einer in Figur 3 illustrierten Warteposition, in welche die erste Aufbauplatte 13' im Wesentlichen vertikal ausgerichtet ist, um die ersten Schwenkachsen 102 verschwenkbar. In der Bereitstellungsposition wird einem nicht dargestellten Manipulator, insbesondere ein Mehrachsen-Feeder (auch als Fördereinrichtung bezeichnet) oder ein Industrieroboter oder eine anderweitig geartete Einrichtung, die Fixiervorrichtung 10 für einen Wechsel der Halte- und/oder Bearbeitungseinrichtung 11 hingehalten. Entweder wird dem Manipulator dabei eine in der Fixiervorrichtung 10 gehalterte Halte- und/oder Bearbeitungseinrichtung 11 hingehalten und somit zur Verfügung gestellt, damit die Halte- und/oder Bearbeitungseinrichtung 11 in einfacher Weise von dem Manipulator im Sinne eines Werkzeugwechsels aufgenommen werden kann, oder dem Manipulator wird eine leere Fixiervorrichtung 10 hingehalten, damit der mit einer Halte- und/oder Bearbeitungseinrichtung 11 bestückte Manipulator diese Halte- und/oder Bearbeitungseinrichtung 11 in die Fixiervorrichtung 10 abgeben kann und anschließend beispielsweise eine andere Halte- und/oder Bearbeitungseinrichtung 11 aufnehmen kann, welche er nach einer Drehung des Drehtisches vorzugsweise von einem zweiten Bereitstellungselement 6" aufnimmt. Denkbar ist, dass die Schwenkbewegung des ersten Bereitstellungselements 6' um die erste Schwenkachse 102 und die Drehbewegung des Basiselements 3 um die Drehachse 102 nacheinander oder gleichzeitig erfolgen. Eine gleichzeitige Bewegung ermöglicht einen besonders zeiteffizienten Betrieb.

Die erste Schwenkeinrichtung 4' umfasst einen ersten Schwenkarm 5', welcher mittels eines ersten Drehgelenks 15' am ersten Bereitstellungselement 6' um eine zweite Schwenkachse 102 drehgelenkig angebunden ist und welcher mittels eines zweiten Drehgelenks 14' am Basiselement 3 um eine weitere zweite Schwenkachse 102 drehgelenkig angebunden ist.

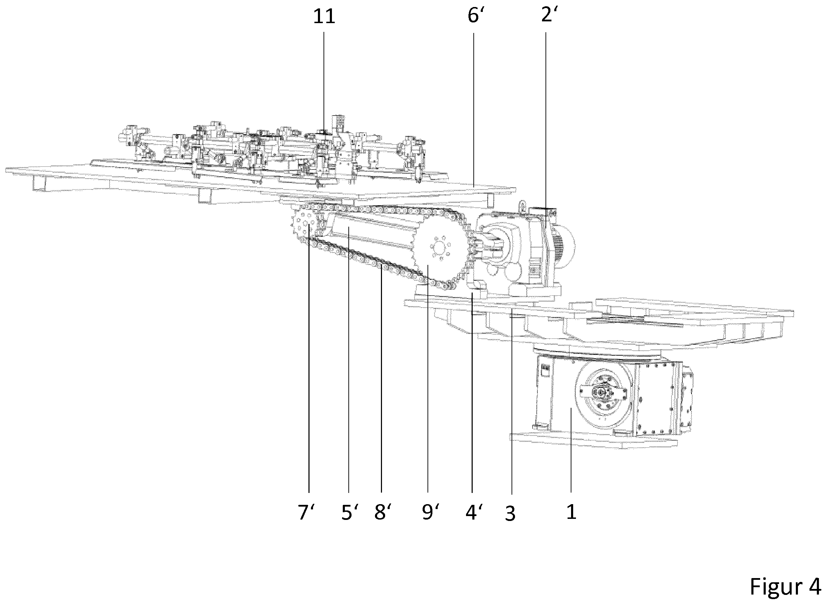

Das eine Ende des ersten Schwenkarms 5' ist dabei in einem am ersten Bereitstellungselement 6' befestigten zweiten Lagerbock 17' drehbar gelagert. Das andere Ende des Schwenkarms 5' ist beispielsweise über Schellen 19 drehfest mit einer Antriebswelle eines ersten Motors 2' verbunden, wobei die Antriebswelle in einem am Basiselement 3 befestigten ersten Lagerbock 18' drehbar gelagert ist. Parallel zum ersten Schwenkarm 5' verläuft eine Kette 8' über ein mit dem zweiten Lagerbock 17' drehfest verbundenen ersten Kettenrad 7' und einem mit dem ersten Lagerbock 18' drehfest verbundenen zweiten Kettenrad 9'. Die Zentralachse des ersten Kettenrads 7' fluchtet mit der Drehachse des ersten Drehgelenks 15'. Die Zentralachse des zweiten Kettenrads 9' fluchtet mit der Drehachse des zweiten Drehgelenks 14'. Die Antriebsachse bildet gleichzeitig die Drehachse für das zweite Drehgelenk 14'. Der Durchmesser des zweiten Kettenrads 9' ist größer als der Durchmesser des ersten Kettenrads 7'. Eine Betätigung des ersten Motors 2 führt sodann zu einem Verschwenken des ersten Schwenkarms 5' um die Drehachse des zweiten Drehgelenks 14'. Hierdurch wird das zweite Drehgelenk 15' und somit der zweite Lagerbock 17' um die Antriebsachse verschwenkt, wodurch sich das erste Kettenrad 7' auf einer Planetenbahn um das zweite Kettenrad 9' bewegt. Durch die Kopplung zwischen dem ersten und dem zweiten Kettenrad 7', 9' über die Kette 8' wird das erste Kettenrad 7' um die Drehachse des ersten Drehgelenks 15' verschwenkt. Durch den ersten Motor 2' wird somit die Aufbauplatte 13' sowohl um die Drehachse des ersten Drehgelenks 15', als auch um die Drehachse des zweiten Drehgelenks 14' verschwenkt. Das erste Bereitstellungselement 6' verschwenkt somit um beide erste Schwenkachsen 102. Die erste Aufbauplatte 13' kann somit zwischen der vertikalen Warteposition (siehe Figuren 3, 5 und 6) und der horizontalen Bereitstellungsposition (siehe Figuren 1 und 4) verfahren werden. Der Schwenkwinkel kann durch das Größenverhältnis zwischen dem ersten und dem zweiten Kettenrad 7', 9' eingestellt werden.

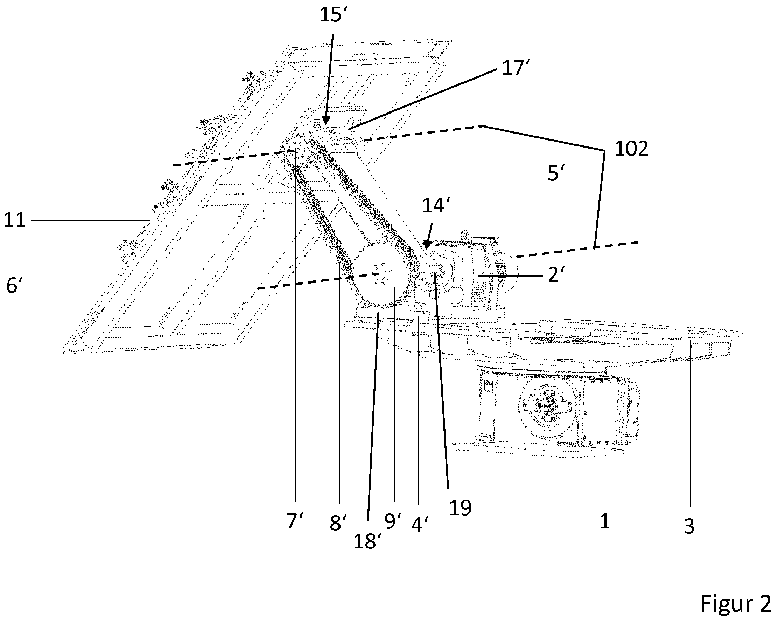

Die Vorrichtung 1 weist im vorliegenden Beispiel ferner ein zum ersten Bereitstellungselement 6' analog ausgebildetes zweites Bereitstellungselement 6" auf, welches mittels einer zur ersten Schwenkeinrichtung 4' analog ausgebildeten zweiten Schwenkeinrichtung 4" ebenfalls zwischen einer Bereitstellungsposition und einer Warteposition verschwenkt werden kann. Hierfür weist die zweite Schwenkeinrichtung 4" eine zweite Aufbauplatte 13" auf, auf welcher eine weitere Fixiervorrichtung 10 zum Fixieren einer Halte- und/oder Bearbeitungseinrichtung 11 angeordnet ist. Die zweite Schwenkeinrichtung 4" umfasst ferner einen zweiten Schwenkarm 5", dessen eines Ende über ein weiteres zweites Drehgelenk 14" drehgelenkig am Basiselement 3 befestigt ist und dessen anderes Ende über ein weiteres erstes Drehgelenk 15" drehgelenkig am zweiten Bereitstellungselement 6" befestigt ist. Das weitere erste Drehgelenk 15" umfasst einen weiteren zweiten Lagerbock 17", während das weitere zweite Drehgelenk 14" einen weiteren ersten Lagerbock 18" umfasst. Analog zur ersten Schwenkeinrichtung 4' weist die zweite Schwenkeinrichtung 4" einen zweiten Kettenantrieb auf, wobei der zweite Kettenantrieb ein mit dem weiteren zweiten Lagerbock 17" drehfest verbundenes weiteres erstes Kettenrad 7", ein mit dem weiteren ersten Lagerbock 18" drehfest verbundenes weiteres zweites Kettenrad 9", sowie eine auf dem weiteren ersten Kettenrad 7" und auf dem weiteren zweiten Kettenrad 9" laufende weitere Kette 8" umfasst. Der zweite Schwenkarm 5"ist mit einer sich entlang einer zweiten Schwenkachse 103 erstreckenden weiteren Antriebsachse drehfest verbunden, welche mittels eines zweiten Motors 2" antreibbar ist. Die weitere Antriebsachse fluchtet mit der Zentralachse des weiteren zweiten Kettenrads 9". Eine Zentralachse des weiteren ersten Kettenrads 7" fluchtet mit der Drehachse des weiteren ersten Drehgelenks 15". Die erste und die zweite Schwenkeinrichtung 4', 4" sind auf gegenüberliegenden Seiten des Drehtisches angeordnet. In Figuren 2, 3, 4 und 6 sind lediglich aus Gründen der Übersichtlichkeit nur das erste Bereitstellungselement 6' illustriert. Optional ist möglich, dass die Vorrichtung 1 je nach Anforderung modular mit dritten, vierten und/oder weiteren derartigen Bearbeitungselementen und Schwenkeinrichtungen ausgestattet wird.

Durch eine Drehung des Drehtischs kann entweder das in die Bereitstellungposition verfahrene erste Bereitstellungselement 6' oder das in die Bereitstellungposition verfahrene zweite Bereitstellungselement 6" in eine dem Manipulator zugewandte Stellung verfahren werden. Das andere der ersten und zweiten Bereitstellungselemente 6', 6" kann dann in die Warteposition verfahren werden und befindet sich somit insbesondere in eine durch einen Werker gut erreichbare Einlegesituation/ Wartungsposition. Insbesondere befindet sich dieses Bereitstellungselement 6', 6" außerhalb eines Schutzzauns (nicht dargestellt) der gesamten Anlage, so dass in einfacher Weise ein Bestücken, Austauschen, Warten oder Instandhalten der entsprechenden Halte- und/oder Bearbeitungseinrichtungen 11 durch den Werker ermöglicht wird.

In Figuren 1 und 4 befindet sich das erste Bereitstellungselement 6' in der Bereitstellungsposition und in einer dem Manipulator zugewandten Stellung, während sich das zweite Bereitstellungselement 6" in der Warteposition und in einer dem Manipulator abgewandten Stellung befindet. Der Manipulator umfasst vorzugsweise einen Industrieroboter zum Bearbeiten, Halten und/oder Transportieren eines Werkstücks mittels einer oder mehrerer Halte- und/oder Bearbeitungseinrichtungen 11. Das Werkstück ist insbesondere ein Metallbauteil einer Fahrzeugkarosserie. Im vorliegenden Beispiel umfasst die Halte- und/oder Bearbeitungseinrichtung 11 insbesondere eine Bauteilgreifeinrichtung. Die Fixiervorrichtung 10 umfasst sodann insbesondere eine standardisierte Aufnahme für die Bauteilgreifeinrichtung.

Zum Überführen des ersten Bereitstellungselements 6' von der Bereitstellungsposition (siehe Figur 1) in die Warteposition (siehe Figuren 3, 5 und 6) wird die erste Schwenkvorrichtung 4' betätigt, wodurch sich die erste Aufbauplatte 13' in eine vertikale Stellung verschwenkt (siehe Figur 2). In dieser Stellung kann der Drehtisch um die Drehachse 101 gedreht werden, um das erste Bereitstellungselement 6' in die dem Manipulator abgewandte Stellung zu bringen und das zweite Bereitstellungselement 6" in eine dem Manipulator zugewandte Stellung zu bringen. Denkbar ist, dass für einen Wechsel der Bauteilgreifeinrichtung eine erste Bauteilgreifeinrichtung auf der ersten Aufbauplatte 13' von dem Manipulator abgelegt wird, wenn das erste Bereitstellungselement 6' in der Bereitstellungsposition und in einer dem Manipulator zugewandten Stellung ist (Figuren 1 und 4) und dass anschließend das erste Bereitstellungselement 6' in die Warteposition verfahren wird und der Drehtisch um 180 Grad gedreht wird, wobei abschließend das zweite Bereitstellungselement 6" in die Bereitstellungsposition verfahren wird, damit der Manipulator eine auf der zweiten Aufbauplatte 13" befindliche zweites Bauteilgreifeinrichtung aufnehmen kann. Die erste Bauteilgreifeinrichtung kann sodann auf der dem Manipulator abgewandten Seite durch den Werker gewechselt und/oder gewartet werden.

Denkbar ist, dass neben der Vorrichtung 100 ein Magazin 12 angeordnet ist, in welchem eine Mehrzahl von Halte- und/oder Bearbeitungseinrichtungen 11 abgelegt sind, die von den Bereitstellungselementen 6', 6" aufgenommen werden können. Denkbar ist, dass das Magazin 12 in Umfangsrichtung um die Drehachse 101 zwischen dem Manipulator und einem Arbeitsplatz für den Werker angeordnet ist. Nach Abgabe einer Bauteilgreifeinrichtung an den Manipulator kann der Drehtisch während des Arbeitseinsatzes des Manipulators beispielsweise gedreht werden und dem Werker weitere in dem Magazin 12 befindliche Bauteilgreifeinrichtungen zu Wartungs- und/oder Prüfungszwecken zur Verfügung stellen.

Somit stellt die Erfindung ein System aus Vorrichtung 100, Manipulator, Magazin 12, Wechsel- und/oder Wartungsstation zur Verfügung, das einerseits dem Manipulator in immer gleicher einfacher Lageorientierung ein Halte- und/oder Bearbeitungseinrichtung 11 präsentiert und gleichzeitig die Wartung/Instandhaltung der anderen Halte- und/oder Bearbeitungseinrichtungen 11 im Magazin 12 durch einen Werker ohne Entnahme der Halte- und/oder Bearbeitungseinrichtungen 11 aus dem System ermöglicht.

### BEZUGSZEICHENLISTE

- 1: Haltebasis, Drehtisch
- 2: Motor
- 3: Basiselement, Tischplatte
- 4: Schwenkeinrichtung
- 5: Schwenkarm
- 6: Bereitstellungselement
- 7: Erstes Kettenrad
- 8: Rollenkette
- 9: Zweites Kettenrad
- 10: Fixiervorrichtung
- 11: Halte- und/oder Bearbeitungseinrichtungen
- 12: Werkzeugmagazin
- 13: Aufbauplatte
- 14: Zweites Drehgelenk
- 15: Erstes Drehgelenk
- 16: Antriebsmotor
- 17: Zweiter Lagerbock
- 18: Erster Lagerbock
- 19: Schelle
- 100: Vorrichtung
- 101: Drehachse
- 102: Erste Schwenkachse
- 103: Zweite Schwenkachse

## Patentansprüche

1. Vorrichtung (100) zur Bereitstellung von Halte- und/oder Bearbeitungseinrichtungen (11) für einen Manipulator, insbesondere in einer Herstellungsstraße zur Herstellung von Fahrzeugkarosserien, wobei die Vorrichtung (100) eine Haltebasis (1) und ein gegenüber der Haltebasis (1) um eine Drehachse (101) drehbeweglich gelagertes Basiselement (3) aufweist, wobei an dem Basiselement (3) wenigstens ein erstes und ein zweites Bereitstellungselement (6', 6") befestigt sind, wobei das erste und das zweite Bereitstellungselement (6', 6") jeweils zur Aufnahme der Halte- und/oder Bearbeitungseinrichtungen (11) vorgesehen sind, wobei das erste Bereitstellungselement (6') mittels einer ersten Schwenkeinrichtung (4') wenigstens um eine zur Drehachse (101) senkrechte erste Schwenkachse (102) verschwenkbar ist und wobei das zweite Bereitstellungselement (6") mittels einer zweiten Schwenkeinrichtung (4") wenigstens um eine zur Drehachse (101) senkrechte zweite Schwenkachse (103) verschwenkbar ist, wobei das erste Bereitstellungselement (6') über zwei Drehgelenke (14', 15') mit dem Basiselement (3) verbunden ist und das erste Bereitstellungselement (6') beim Überführen zwischen einer Bereitstellungsposition und einer Warteposition sowohl um die Drehachse (101) des ersten Drehgelenks (14'), als auch um die Drehachse (103) des zweiten Drehgelenks (15') verschwenkt wird, **dadurch gekennzeichnet, dass** sich das eine der Drehgelenke (14') auf einer Planetenbahn um das andere Drehgelenk (15') bewegt.

2. Vorrichtung (100) nach Anspruch 1, wobei das erste Bereitstellungselement (6') eine Aufbauplatte (13) umfasst, auf welcher eine Fixiervorrichtung (10') zum Fixieren einer Halte- und/oder Bearbeitungseinrichtung (11) angeordnet ist.

3. Vorrichtung (100) nach einem der Ansprüche 1 oder 2, wobei die erste Schwenkeinrichtung (4') einen ersten Schwenkarm (5') umfasst, dessen eines Ende über ein erstes Drehgelenk (15') drehgelenkig am ersten Bereitstellungselement (6') befestigt ist und dessen anderes Ende über ein zweites Drehgelenk (14') drehgelenkig am Basiselement (3) befestigt ist.

4. Vorrichtung (100) nach Anspruch 3, wobei die erste Schwenkeinrichtung (4') einen ersten Kettenantrieb umfasst, wobei der erste Kettenantrieb ein mit dem ersten Bereitstellungselement (6') gekoppeltes erstes Kettenrad (7'), ein mit dem Basiselement (3) gekoppeltes zweites Kettenrad (9'), sowie eine auf dem ersten Kettenrad (7') und auf dem zweiten Kettenrad (9') laufende Kette (8') umfasst.

5. Vorrichtung (100) nach Anspruch 4, wobei der erste Schwenkarm mittels eines ersten Motors um die Drehachse des zweiten Drehgelenks verschwenkbar ist, wobei das zweite Kettenrad (9') drehfest mit dem Basiselement (3) gekoppelt ist und wobei das erste Kettenrad (7') drehfest mit dem ersten Bereitstellungselement (6') gekoppelt ist, wobei der Durchmesser des zweiten Kettenrads (9') vorzugsweise größer als der Durchmesser des ersten Kettenrads (7') ist.

6. Vorrichtung nach Anspruch 5, wobei der erste Motor (2') zum Antreiben einer in einem am Basiselement (3) befestigten ersten Lagerbock (18') drehbar gelagerten Antriebswelle vorgesehen ist, auf welcher ein Ende des Schwenkarm (5') drehfest befestigt ist, während ein anderes Ende des Schwenkarms (5') drehgelenkig in einem am ersten Bereitstellungselement (6') befestigten zweiten Lagerbock (17') gelagert ist, wobei das zweite Kettenrad (9') drehfest am ersten Lagerbock (18') befestigt ist und wobei das erste Kettenrad (7') drehfest am zweiten Lagerbock (17') befestigt ist.

7. Vorrichtung nach einem der Ansprüche 1 bis 4, wobei dass das zweite Kettenrad (9') über eine Antriebsachse mit dem ersten Motor gekoppelt ist und das zweite Kettenrad (9') um eine mit dem ersten Drehgelenk (15') fluchtende Drehachse (103) mittels des ersten Motors (2") drehbar ist, während ein Ende des ersten Schwenkarms (5") drehgelenkig an einem am Basiselement (3) befestigten ersten Lagerbock (18") gelagert ist, und das andere Ende des ersten Schwenkarms (5") drehgelenkig an einem am ersten Bereitstellungselement (6') befestigten zweiten Lagerbock (17") befestigt ist, während das erste Kettenrad (7") drehfest am zweiten Lagerbock (17") befestigt ist.

8. Vorrichtung (100) nach einem der Ansprüche 2 bis 7, wobei das zweite Bereitstellungselement (6") eine weitere Aufbauplatte (13") umfasst, auf welcher eine weitere Fixiervorrichtung (10") zum Fixieren einer Halte- und/oder Bearbeitungseinrichtung (11) angeordnet ist und/oder wobei die zweite Schwenkeinrichtung (4") einen zweiten Schwenkarm (5") umfasst, dessen eines Ende über ein weiteres zweites Drehgelenk (14") drehgelenkig am Basiselement (3) befestigt ist und dessen anderes Ende über ein weiteres erstes Drehgelenk (15") drehgelenkig am zweiten Bereitstellungselement (6") befestigt ist und/oder dass die zweite Schwenkeinrichtung (4") einen zweiten Kettenantrieb umfasst, wobei der zweite Kettenantrieb ein mit dem zweiten Bereitstellungselement (6") gekoppeltes weiteres erstes Kettenrad (7"), ein mit dem Basiselement (3) gekoppeltes weiteres zweites Kettenrad (9"), sowie eine auf dem weiteren ersten Kettenrad (7") und auf dem weiteren zweiten Kettenrad (9") laufende weitere Kette (8") umfasst und/oder wobei das weitere zweite Kettenrad (9") mit einer sich entlang der zweiten Schwenkachse (103) erstreckenden weiteren Antriebsachse verbunden ist, welche mittels eines zweiten Motors (2") antreibbar ist und welche mit der Drehachse des weiteren zweiten Drehgelenks (15") fluchtet, und/oder dass das weitere erste Kettenrad (7") drehfest relativ zum zweiten Bereitstellungselement (6") am zweiten Bereitstellungselement (6") befestigt ist, wobei eine Zentralachse des weiteren ersten Kettenrads (7") mit der Drehachse des weiteren ersten Drehgelenks (14") fluchtet.

9. Vorrichtung (100) nach einem der vorhergehenden Ansprüche, wobei die erste und die zweite Schwenkachse (102, 103) zueinander parallel ausgerichtet sind.

10. Vorrichtung (100) nach einem der vorhergehenden Ansprüche, wobei das Basiselement (3) als Drehtisch ausgebildet ist, welcher gegenüber der Haltebasis (1) mittels eines Antriebsmotors (16) drehbar ist.

11. Vorrichtung (100) nach einem der vorhergehenden Ansprüche, wobei die Vorrichtung (100) ein drittes und viertes Bereitstellungselement aufweist, wobei das dritte und das vierte Bereitstellungselement jeweils zur Aufnahme der Halte- und/oder Bearbeitungseinrichtungen (11) vorgesehen sind, wobei das dritte Bereitstellungselement mittels einer dritten Schwenkeinrichtung um eine zur Drehachse (101) senkrechte dritte Schwenkachse verschwenkbar ist und wobei das vierte Bereitstellungselement mittels einer vierten Schwenkeinrichtung um eine zur Drehachse (101) senkrechte vierte Schwenkachse verschwenkbar ist, wobei das erste, zweite, dritte und vierte Bereitstellungselement vorzugsweise rotationssymmetrisch um die Drehachse (101) angeordnet sind.

12. System zum Transportieren und/oder Bearbeiten von Werkstücken innerhalb einer Herstellungsstraße zur Herstellung von Fahrzeugkarosserien, wobei das System eine Vorrichtung (100) zur Bereitstellung der Halte- und/oder Bearbeitungseinrichtungen (11) gemäß einem der vorhergehenden Ansprüche aufweist und wobei das System ferner einen mit von der Vorrichtung (100) bereitgestellten Halte- und/oder Bearbeitungseinrichtungen (11) bestückbaren Manipulator aufweist.

13. System nach Anspruch 11, wobei das System ein Magazin für eine Mehrzahl von Halte- und/oder Bearbeitungseinrichtungen (11) aufweist und/oder wobei das System eine Wechsel- und/oder Wartungsstation aufweist.

## Claims

1. Device (100) for providing retaining and/or processing apparatuses (11) for a manipulator, in particular in a production line for producing vehicle bodies, wherein the device (100) comprises a retaining base (1) and a base element (3) which is mounted rotatably about an axis of rotation (101) in relation to the retaining base (1), wherein at least one first and one second providing element (6', 6") are fastened to the base element (3), wherein the first and the second providing element (6', 6") are each provided for receiving the retaining and/or processing apparatuses (11), wherein the first providing element (6') is pivotable at least about a first pivot axis (102) which is perpendicular to the axis of rotation (101) by means of a first pivoting apparatus (4'), and wherein the second providing element (6") is pivotable at least about a second pivot axis (103) which is perpendicular to the axis of rotation (101) by means of a second pivoting apparatus (4"), wherein the first providing element (6) is connected to the base element (3) via two rotary joints (14', 15'), and the first providing element (6) is pivoted both about the axis of rotation (101) of the first rotary joint (14') and about the axis of rotation (103) of the second rotary joint (15') during the transfer between a providing position and a waiting position, **characterized in that** the one of the rotary joints (14') moves on a planetary orbit about the other rotary joint (15').

2. Device (100) according to Claim 1, wherein the first providing element (6') comprises a construction plate (13) on which a securing device (10') for securing a retaining and/or processing apparatus (11) is arranged.

3. Device (100) according to either of Claims 1 and 2, wherein the first pivoting apparatus (4') comprises a first pivoting arm (5'), the one end of which is fastened to the first providing element (6') for rotary articulation via a first rotary joint (15') and the other end of which is fastened to the base element (3) for rotary articulation via a second rotary joint (14').

4. Device (100) according to Claim 3, wherein the first pivoting apparatus (4') comprises a first chain drive, wherein the first chain drive comprises a first chain wheel (7') coupled to the first providing element (6'), a second chain wheel (9') coupled to the base element (3), and a chain (8') running on the first chain wheel (7') and on the second chain wheel (9').

5. Device (100) according to Claim 4, wherein the first pivoting arm is pivotable about the axis of rotation of the second rotary joint by means of a first motor, wherein the second chain wheel (9') is coupled to the base element (3) in a rotationally fixed manner, and wherein the first chain wheel (7') is coupled to the first providing element (6') in a rotationally fixed manner, wherein the diameter of the second chain wheel (9') is preferably larger than the diameter of the first chain wheel (7').

6. Device according to Claim 5, wherein the first motor (2') is provided for driving a drive shaft which is mounted rotatably in a first bearing bracket (18') fastened to the base element (3) and on which one end of the pivoting arm (5') is fastened in a rotationally fixed manner while another end of the pivoting arm (5') is mounted for rotary articulation in a second bearing bracket (17') fastened to the first providing element (6'), wherein the second chain wheel (9') is fastened to the first bearing bracket (18') in a rotationally fixed manner, and wherein the first chain wheel (7') is fastened to the second bearing bracket (17') in a rotationally fixed manner.

7. Device according to one of Claims 1 to 4, wherein the second chain wheel (9') is coupled to the first motor via a drive axle and the second chain wheel (9') is rotatable by means of the first motor (2") about an axis of rotation (103) aligned with the first rotary joint (15') while one end of the first pivoting arm (5") is mounted for rotary articulation on a first bearing bracket (18") fastened to the base element (3), and the other end of the first pivoting arm (5") is fastened for rotary articulation to a second bearing bracket (17") fastened to the first providing element (6'), while the first chain wheel (7") is fastened to the second bearing bracket (17") in a rotationally fixed manner.

8. Device (100) according to one of Claims 2 to 7, wherein the second providing element (6") comprises a further construction plate (13") on which a further securing device (10") for securing a retaining and/or processing apparatus (11) is arranged, and/or wherein the second pivoting apparatus (4") comprises a second pivoting arm (5"), the one end of which is fastened for rotary articulation to the base element (3) via a further second rotary joint (14") and the other end of which is fastened for rotary articulation to the second providing element (6") via a further first rotary joint (15"), and/or in that the second pivoting apparatus (4") comprises a second chain drive, wherein the second chain drive comprises a further first chain wheel (7") coupled to the second providing element (6"), a further second chain wheel (9") coupled to the base element (3), and a further chain (8") running on the further first chain wheel (7") and on the further second chain wheel (9"), and/or wherein the further second chain wheel (9") is connected to a further drive axle which extends along the second pivot axis (103), is drivable by means of a second motor (2") and is aligned with the axis of rotation of the further second rotary joint (15"), and/or in that the further first chain wheel (7") is fastened to the second providing element (6") in a rotationally fixed manner relative to the second providing element (6"), wherein a central axis of the further first chain wheel (7") is aligned with the axis of rotation of the further first rotary joint (14").

9. Device (100) according to one of the preceding claims, wherein the first and the second pivot axis (102, 103) are oriented parallel to each other.

10. Device (100) according to one of the preceding claims, wherein the base element (3) is designed as a rotary table which is rotatable in relation to the retaining base (1) by means of a driving motor (16).

11. Device (100) according to one of the preceding claims, wherein the device (100) comprises a third and fourth providing element, wherein the third and the fourth providing element are each provided for receiving the retaining and/or processing apparatuses (11), wherein the third providing element is pivotable about a third pivot axis perpendicular to the axis of rotation (101) by means of a third pivoting apparatus, and wherein the fourth providing element is pivotable about a fourth pivot axis which is perpendicular to the axis of rotation (101) by means of a fourth pivoting apparatus, wherein the first, second, third and fourth providing element are preferably arranged in a rotationally symmetrical manner about the axis of rotation (101).

12. System for transporting and/or processing workpieces within a production line for producing vehicle bodies, wherein the system comprises a device (100) for providing the retaining and/or processing apparatuses (11) according to one of the preceding claims, and wherein the system furthermore comprises a manipulator which can be equipped with retaining and/or processing apparatuses (11) which are provided by the device (100).

13. System according to Claim 11, wherein the system comprises a magazine for a plurality of retaining and/or processing apparatuses (11), and/or wherein the system comprises a changing and/or maintenance station.

## Revendications

1. Dispositif (100) de fourniture d'appareils de support et/ou d'usinage (11) pour un manipulateur, en particulier dans une ligne de fabrication pour la fabrication de carrosseries de véhicules, dans lequel le dispositif (100) présente une base de support (1) et un élément de base (3) monté de façon rotative autour d'un axe de rotation (101) par rapport à la base de support (1), dans lequel au moins un premier et un deuxième éléments de fourniture (6', 6") sont fixés sur l'élément de base (3), dans lequel le premier et le deuxième éléments de fourniture (6', 6") sont prévus respectivement pour la réception d'appareils de support et/ou d'usinage (11), dans lequel le premier élément de fourniture (6') peut pivoter au moyen d'un premier dispositif de pivotement (4') au moins autour d'un premier axe de pivotement (102) perpendiculaire à l'axe de rotation (101) et dans lequel le deuxième élément de fourniture (6") peut pivoter au moyen d'un deuxième dispositif de pivotement (4") au moins autour d'un deuxième axe de pivotement (103) perpendiculaire à l'axe de rotation (101), dans lequel le premier élément de fourniture (6') est relié à l'élément de base (3) au moyen de deux articulations rotatives (14', 15') et le premier élément de fourniture (6') pivote aussi bien autour de l'axe de rotation (101) de la première articulation rotative (14') qu'autour de l'axe de rotation (103) de la deuxième articulation rotative (15') lors du transfert entre une position de fourniture et une position d'attente, **caractérisé en ce qu'**une des articulations rotatives (14') se déplace sur une trajectoire planétaire autour de l'autre articulation rotative (15').

2. Dispositif (100) selon la revendication 1, dans lequel le premier élément de fourniture (6') comprend une plaque de montage (13), sur laquelle est disposé un dispositif de fixation (10') pour fixer un appareil de support et/ou d'usinage (11).

3. Dispositif (1) selon une des revendications 1 ou 2, dans lequel le premier dispositif de pivotement (4') comprend un premier bras pivotant (5'), dont une extrémité est fixée de façon articulée rotative au premier élément de fourniture (6') au moyen d'une première articulation rotative (15') et dont l'autre extrémité est fixée de façon articulée rotative à l'élément de base (3) au moyen d'une deuxième articulation rotative (14').

4. Dispositif (100) selon la revendication 3, dans lequel le premier dispositif de pivotement (4') comprend un premier entraînement à chaîne, dans lequel le premier entraînement à chaîne comprend une première roue à chaîne (7') couplée au premier élément de fourniture (6'), une deuxième roue à chaîne (9') couplée à l'élément de base (3) ainsi qu'une chaîne (8') tournant sur la première roue à chaîne (7') et sur la deuxième roue à chaîne (9').

5. Dispositif (100) selon la revendication 4, dans lequel le premier bras pivotant peut pivoter autour de l'axe de rotation de la deuxième articulation rotative au moyen d'un premier moteur, dans lequel la deuxième roue à chaîne (9') est couplée de façon calée en rotation à l'élément de base (3) et dans lequel la première roue à chaîne (7') est couplée de façon calée en rotation au premier élément de fourniture (6'), dans lequel le diamètre de la deuxième roue à chaîne (9') est de préférence plus grand que le diamètre de la première roue à chaîne (7').

6. Dispositif selon la revendication 5, dans lequel le premier moteur (2') est prévu pour entraîner un arbre d'entraînement monté de façon rotative dans un premier support de palier (18') fixé à l'élément de base (3), sur lequel une extrémité du bras pivotant (5') est fixée de façon calée en rotation, tandis qu'une autre extrémité du bras pivotant (5') est monté de façon articulée rotative dans un deuxième support de palier (17') fixé au premier élément de fourniture (6'), dans lequel la deuxième roue à chaîne (9') est fixée de façon calée en rotation au premier support de palier (18') et dans lequel la première roue à chaîne (7') est fixée de façon calée en rotation au deuxième support de palier (17').

7. Dispositif selon l'une quelconque des revendications 1 à 4, dans lequel la deuxième roue à chaîne (9') est couplée au premier moteur par un axe d'entraînement et la deuxième roue à chaîne (9') peut tourner au moyen du premier moteur (2") autour d'un axe de rotation (103) aligné avec la première articulation rotative (15'), tandis qu'une extrémité du premier bras pivotant (5") est montée de façon articulée rotative sur un premier support de palier (18") fixé à l'élément de base (3), et l'autre extrémité du premier bras pivotant (5") est fixée de façon articulée rotative à un deuxième support de palier (17") fixé sur le premier élément de fourniture (6'), tandis que la première roue à chaîne (7") est fixée de façon calée en rotation au deuxième support de palier (17").

8. Dispositif (100) selon l'une quelconque des revendications 2 à 7, dans lequel le deuxième élément de fourniture (6") comprend une autre plaque de montage (13"), sur laquelle est disposé un autre dispositif de fixation (10") pour fixer un appareil de support et/ou d'usinage (11) et/ou dans lequel le deuxième dispositif de pivotement (4") comprend un deuxième bras pivotant (5"), dont une extrémité est fixée de façon articulée rotative à l'élément de base (3) par une autre deuxième articulation rotative (14") et dont l'autre extrémité est fixée de façon articulée rotative au deuxième élément de fourniture (6") par une autre première articulation rotative (15") et/ou le deuxième dispositif de pivotement (4") comprend un deuxième entraînement à chaîne, dans lequel le deuxième entraînement à chaîne comprend une autre première roue à chaîne (7") couplée au deuxième élément de fourniture (6"), une autre deuxième roue à chaîne (9") couplée à l'élément de base (3) ainsi qu'une autre chaîne (8") tournant sur l'autre première roue à chaîne (7") et sur l'autre deuxième roue à chaîne (9") et/ou dans lequel l'autre deuxième roue à chaîne (9") est reliée à un autre axe d'entraînement s'étendant le long du deuxième axe de pivotement (103), qui peut être entraîné au moyen d'un deuxième moteur (2") et qui est aligné avec l'axe de rotation de l'autre deuxième articulation rotative (15"), et/ou l'autre première roue à chaîne (7") est fixée au deuxième élément de fourniture (6") de façon calée en rotation par rapport au deuxième élément de fourniture (6"), dans lequel un axe central de l'autre première roue à chaîne (7") est aligné avec l'axe de rotation de l'autre première articulation rotative (14").

9. Dispositif (100) selon l'une quelconque des revendications précédentes, dans lequel le premier et le deuxième axes de pivotement (102, 103) sont orientés parallèlement l'un à l'autre.

10. Dispositif (100) selon l'une quelconque des revendications précédentes, dans lequel l'élément de base (3) est constitué par une table tournante, qui peut tourner par rapport à la base de support (1) au moyen d'un moteur d'entraînement (16).

11. Dispositif (100) selon l'une quelconque des revendications précédentes, dans lequel le dispositif (100) présente un troisième et un quatrième éléments de fourniture, dans lequel le troisième et le quatrième éléments de fourniture sont prévus respectivement pour recevoir les appareils de support et/ou d'usinage (11), dans lequel le troisième élément de fourniture peut pivoter au moyen d'un troisième dispositif de pivotement autour d'un troisième axe de pivotement perpendiculaire à l'axe de rotation (101) et dans lequel le quatrième élément de fourniture peut pivoter au moyen d'un quatrième dispositif de pivotement autour d'un quatrième axe de pivotement perpendiculaire à l'axe de rotation (101), dans lequel le premier, le deuxième, le troisième et le quatrième éléments de fourniture sont disposés de préférence avec la symétrie de rotation autour de l'axe de rotation (101).

12. Système pour le transport et/ou l'usinage de pièces à l'intérieur d'une ligne de fabrication pour la fabrication de carrosseries de véhicules, dans lequel le système présente un dispositif (100) de fourniture d'appareils de support et/ou d'usinage (11) selon l'une quelconque des revendications précédentes et dans lequel le système présente en outre un manipulateur qui peut être garni d'appareils de support et/ou d'usinage (11) fournis par le dispositif (100).

13. Système selon la revendication 11, dans lequel le système présente un magasin pour une multiplicité d'appareils de support et/ou d'usinage (11) et/ou dans lequel le système présente une station de changement et/ou d'attente.
